# EUROPEAN PATENT APPLICATION

(11) **EP 4 780 003 A1**
(43) Date of publication of application: **22.07.2026**
(21) Application number: 24864380.1
(22) Date of filing: 15.08.2024
(51) Int. Cl.: H04N 21/472

(54) **METHOD AND APPARATUS FOR VIDEO PROGRESS CONTROL, AND DEVICE AND STORAGE MEDIUM**

(30) Priority: 11.09.2023 CN 202311167231
(71) Applicant: Beijing Zitiao Network Technology Co., Ltd., Beijing 100190 (CN)
(72) Inventor: CHEN, Lijun, Beijing 100028 (CN); YU, Feifei, Beijing 100028 (CN)
(74) Representative: Grünecker Patent- und Rechtsanwälte PartG mbB
(86) International application number: PCT/CN2024/112359
(87) International publication number: WO 2025/055657

(57) **Abstract**

According to embodiments of the disclosure, a method and a device, an apparatus and a storage medium for controlling video progress are provided. The method includes: presenting, in a first progress control mode, a thumbnail video frame of a video at a first size, the first progress control mode having a first progress adjustment precision; and presenting, in a second progress control mode, the thumbnail video frame of the video at a second size, the second progress control mode having a second progress adjustment precision different from the first progress adjustment precision, and the second size being different from the first size. In this way, the size of the thumbnail video frame may be dynamically changed according to different progress control modes, and a user may better understand the current progress control mode while prompting to the user the change of the progress control mode, thereby improving the user experience.

## Description

This application claims the benefit of Chinese Patent Application No. 202311167231.7, filed on September 11, 2023 and entitled "METHOD, APPARATUS, DEVICE AND STORAGE MEDIUM FOR CONTROLLING VIDEO PROGRESS", the entire content of which is incorporated herein by reference.

### FIELD

Example embodiments of the disclosure generally relate to the field of computers, and in particular, to a method, an apparatus, a device, and a computer-readable storage medium for controlling video progress.

### BACKGROUND

With the rapid development of Internet technologies, various applications have become an important tool in people's daily life. Some applications may provide video playback services to a user. During the video playback process, the user may control the playback progress of a played video by dragging a progress bar to quickly locate the playback progress to a desired video playback position. However, in practical scenarios, the duration of different played videos varies widely. Especially when a played video has a long duration, the user is unable to quickly and accurately locate the desired video playback position. Therefore, an efficient and quick video progress control scheme is expected, such that the user may accurately adjust the video playback progress.

### SUMMARY

In a first aspect of the disclosure, a method for controlling video progress is provided. The method includes: presenting, in a first progress control mode, a thumbnail video frame of a video at a first size, the first progress control mode having a first progress adjustment precision; and presenting, in a second progress control mode, the thumbnail video frame of the video at a second size, the second progress control mode having a second progress adjustment precision different from the first progress adjustment precision, and the second size being different from the first size.

In a second aspect of the disclosure, an apparatus for controlling video progress is provided. The apparatus includes: a first thumbnail video frame presentation module configured to present, in a first progress control mode, a thumbnail video frame of a video at a first size, the first progress control mode having a first progress adjustment precision; and a second thumbnail video frame presentation module configured to present, in a second progress control mode, the thumbnail video frame of the video at a second size, the second progress control mode having a second progress adjustment precision different from the first progress adjustment precision, and the second size being different from the first size.

In a third aspect of the disclosure, an electronic device is provided. The apparatus includes at least one processing unit; and at least one memory coupled to the at least one processing unit and storing instructions for execution by the at least one processing unit. The instructions, when executed by the at least one processing unit, cause the device to perform the method of the first aspect.

In a fourth aspect of the disclosure, a computer-readable storage medium is provided. The medium has a computer program stored thereon, where the computer program, when executed by a processor, implements the method of the first aspect .

It should be understood that the content described in this summary section is not intended to limit the key features or major features of the embodiments of the disclosure, nor is it intended to limit the scope of the present disclosure. Other features of the disclosure will become readily understood from the following description.

### BRIEF DESCRIPTION OF DRAWINGS

The above and other features, advantages, and aspects of various embodiments of the disclosure will become more apparent from the following detailed description taken in conjunction with the accompanying drawings. In the drawings, the same or similar reference numbers refer to the same or similar elements, wherein:
FIG. 1 illustrates a schematic diagram of an example environment in which embodiments of the disclosure can be implemented;
FIGS. 2A to 12C respectively illustrate schematic diagrams of examples of user interfaces according to some embodiments of the disclosure;
FIG. 13 illustrates a flowchart of a process for controlling video progress according to some embodiments of the disclosure;
FIG. 14 illustrates a block diagram for an apparatus for controlling video progress according to some embodiments of the disclosure; and
FIG. 15 illustrates an electronic device in which one or more embodiments of the disclosure may be implemented.

### DETAILED DESCRIPTION

Embodiments of the disclosure will be described in more detail below with reference to the accompanying drawings. Although certain embodiments of the disclosure are shown in the accompanying drawings, it should be understood that the disclosure may be implemented in various forms, and should not be construed as being limited to the embodiments set forth herein, but rather, these embodiments are provided for a more thorough and complete understanding of the disclosure. It should be understood that the drawings and embodiments of the disclosure are for illustrative purposes only and are not intended to limit the scope of the disclosure.

In the descriptions of the embodiments of the disclosure, the terms "including" and the like should be understood as open-ended inclusion, i.e., "including but not limited to". The term "based on" should be understood as "based at least in part on". The term "one embodiment" or "the embodiment" should be understood as "at least one embodiment". The term "some embodiments" should be understood as "at least some embodiments". Other explicit and implicit definitions may also be included below. Other explicit and implicit definitions may also be included below.

It may be understood that data involved in the technical solution (including but not limited to the data itself, acquisition or usage of the data) should comply with the requirements of corresponding laws and regulations and related provisions.

It can be understood that, before the technical solutions disclosed in the embodiments of the disclosure are used, the types, the usage scope, the usage scenario and the like of personal information related to the disclosure should be notified to the user in an appropriate manner according to the relevant laws and regulations, and the authorization thereof should be obtained from the user.

For example, in response to receiving an active request from a user, prompt information is sent to the user to explicitly prompt the user that the requested operation will need to obtain and use user information of the user, so that the user may autonomously select whether to provide user information to software or hardware, such as an electronic device, an application, a server or a storage medium, executing the operation of the technical solution of the disclosure according to the prompt information.

As an optional but non-limiting implementation, in response to receiving an active request of the user, a manner of sending prompt information to the user may be, for example, a pop-up window, and the prompt information may be presented in a text manner in the pop-up window. In addition, the pop-up window may further carry a selection control for the user to select "agree" or "not agree" to provide user information to the electronic device.

It may be understood that the foregoing processes of notification and obtaining a user authorization are merely illustrative, and do not constitute a limitation on implementations of the disclosure, and other manners of meeting related laws and regulations may also be applied to implementations of the disclosure.

As briefly discussed above, some applications may provide video playback services to users. During the video playback process, users may control a playback progress of a played video by dragging a progress bar to quickly locate the playback progress to a desired video playback position. In some implementations, the progress bar of the video may have a follow-up effect, that is, the change in the swipe distance of the finger is consistent with the actual progress change of the progress bar. For example, for a video with a total duration of ten hours, when a playback progress of the video is adjusted through the progress bar, if the swipe distance of the finger is one tenth of the total length of the progress bar, the actual adjustment amount of the video playback progress is one hour. In short, the position of the adjusted progress bar corresponds to the position at which the swipe gesture is lifted, and the adjustment amount of the video progress is a product between the total video duration and the quotient of the swipe distance and the total length of the progress bar.

Although the foregoing implementation may meet the requirement of people on the video playback progress adjustment to some extent, the duration of different videos played in the application varies widely. Especially when the played video has a relatively long duration, as the user drags a progress bar on the long video, the actual adjustment amount of the video playback progress might be more than ten minutes even when the user lightly swipes the progress bar. It can be seen that in the above implementation, the precision adjustment of the second level may not be achieved, and the user is unable to quickly and accurately locate a desired video playback position.

In view of this, it is expected to provide a high efficiency and fast video progress control solution, such that a user may accurately adjust the video playback progress. Further, when multiple progress control modes may be supported, if the user may more directly perceive the change of the progress control mode and the current progress control mode, the user experience may be further improved.

According to some embodiments of the disclosure, a solution for controlling video progress is provided. In this solution, in a first progress control mode, a thumbnail video frame of a video is presented at a first size, the first progress control mode having a first progress adjustment precision; and in a second progress control mode, the thumbnail video frame of the video is presented at a second size, the second progress control mode having a second progress adjustment precision different from the first progress adjustment precision, and the second size being different from the first size. In this way, the size of the thumbnail video frame may be dynamically changed according to different progress control modes, and the user may be helped to better understand the current progress control mode while prompting the user progress control mode is changing, thereby improving the user experience.

### Example Environment

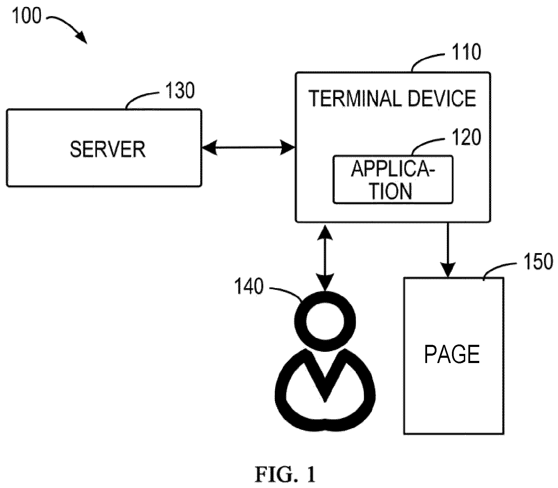

FIG. 1 illustrates a schematic diagram of an example environment 100 in which embodiments of the disclosure can be implemented. In this example environment 100, an application 120 is installed in a terminal device 110. A user 140 may interact with the application 120 via the terminal device 110 and/or an attachment device of the terminal device 110. The application 120 may be a content sharing application capable of providing various services related to the media content/work to the user 140, including browsing, commenting, forwarding, creating (e.g., capturing and/or editing), posting, and the like. As used herein, "media content/work" includes one or more types of content, such as video, pictures, animated figures, picture collection, audio, text, and the like.

In the environment 100 of FIG. 1, if the application 120 is active, the terminal device 110 may present an interface 150 of the application 120. The interface 150 may include various interfaces that the application 120 may provide, such as an information presentation interface, a content creating interface, a content publication interface, a message interface, a personal homepage, and the like. The application 120 may provide a content browsing function to browse various types of content published in the application 120. The application 120 may also provide a content creating function, including capturing, uploading, editing, and/or publishing media content. The application 120 may also provide an interactive function, including interacting with other users (for example, adding friends) and interacting with various types of content (including giving likes, favorites, comments, etc. ).

In some embodiments, the terminal device 110 communicates with a server 130 to enable provisioning of services to the application 120. The terminal device 110 may be any type of mobile terminal, fixed terminal, or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/camcorder, a positioning device, a television receiver, a radio broadcast receiver, an electronic book device, a gaming device, or any combination of the foregoing which including accessories and peripherals of these devices, or any combination thereof. In some embodiments, the terminal device 110 may also support any type of interface for a user (such as a "wearable" circuit, etc. ). The server 130 may be various types of computing systems/servers capable of providing computing capacity, the computing systems including, but not limited to, mainframes, edge computing nodes, computing devices in a cloud environment, and the like.

It should be understood that the structures and functions of the various elements in the environment 100 are described for example purposes only and do not imply any limitation to the scope of the disclosure.

### Example Processes

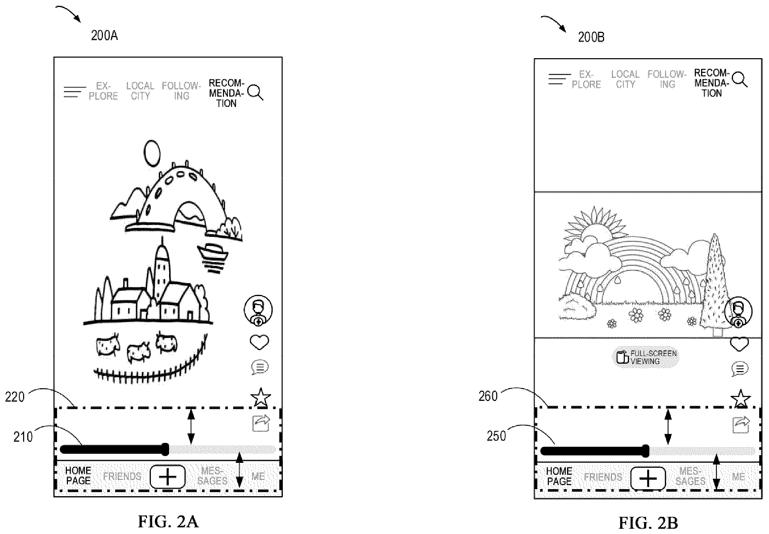

For a better understanding of various embodiments of the disclosure, reference is made to the user interfaces illustrated in FIGS. 2A-12C in the example embodiments below. It should be understood that the user interfaces shown in FIGS. 2A-12C are merely for example, and various designs may actually exist. For example, respective graphical elements and/or controls in the user interface may have different arrangements and different visual representations, where one or more of the elements and/or controls may be omitted or replaced, and one or more other elements and/or controls may also exist. In addition, any suitable content may be included in a user interface. The scope of the disclosure is not limited in this respect.

It should be understood that FIGS. 2A-12C only illustrate the user interface of the user in the portrait mode operation mode. However, the embodiments of the disclosure are also applicable to the landscape operation mode. The disclosure is not limited in this respect.

Further, in various embodiments of the disclosure, the video playback control may be implemented by gesture operations within a region associated with the progress bar. Referring to FIGS. 2A and 2B in order to have a better understanding of the concept of the region associated with the progress bar, FIG. 2A shows a user interface 200A during a portrait video playback process and FIG. 2B shows a user interface 200B during a landscape video playback process. In the example embodiment of FIGS. 2A and 2B, the region associated with the progress bar may include only progress bars 210, 250 themselves. Alternatively, the region associated with the progress bar is configured to include predetermined regions 220, 260, including progress bars 210, 250. The predetermined regions 220, 260 may sometimes be referred to as hot zones.

It should be understood that the predetermined regions 220, 260 do not necessarily include a progress bar. In other embodiments, the predetermined regions 220, 260 may be located in other regions of the user interface, and their widths may be reasonably configured according to actual needs. The disclosure is not limited in this respect.

In the disclosure, the user may control the playback of the video by operations within a region associated with the progress bar. In the following discussion, the operation on the progress bar will be taken as an example of a gesture operation. It should be understood that since there is a mapping relationship between the operation on the progress bar and the operation on the predetermined region, any operation on the progress bar may be mapped to an operation on the predetermined region. Therefore, in embodiments of the disclosure, any operation on the progress bar may be replaced with an operation on the predetermined region. For purposes of brevity only, the same or similar content will not be repeated.

In the following discussion, the progress control mode includes a first progress control mode and a second progress control mode. It should be understood that, in other embodiments, the progress control mode may further include more progress control modes, for example, the progress control mode includes a first progress control mode, a second progress control mode and a third progress control mode. In this case, all discussions of how to enter the second progress control mode and how to adjust the video playback progress in the second progress control mode apply equally to the third progress adjustment mode. For purposes of brevity only, the same or similar content will not be repeated.

In an embodiment of the disclosure, the terminal device 110 may play the video, and adjust the playback progress of the video through the first progress control mode and/or the second progress control mode.

In some embodiments, the first progress control mode has a first progress adjustment precision and the second progress control mode has a second progress adjustment precision.

In some embodiments, when a finger of a user swipes forward or backward on the screen, the playback progress of the video takes a minimum progress adjustment unit as a step size to exhibit a discrete increment or decrement. In this case, the progress adjustment precision may be measured by a minimum progress adjustment unit.

Specifically, in the first progress control mode, as the user's finger swipes on the screen, the video playback progress exhibits a discrete increment or decrement in steps of the first minimum progress adjustment unit, and accordingly, for the same video, in the second progress control mode, as the user's finger swipes on the screen, the video playback progress exhibits a discrete increment or decrement in the steps of the second minimum progress adjustment unit. In this case, if the first minimum progress adjustment unit is different from the second minimum progress adjustment unit, it is considered that the first progress control mode and the second progress control mode have different progress adjustment precisions. Further, if the first minimum progress adjustment unit is greater than the second minimum progress adjustment unit, it is considered that the first progress adjustment precision in the first progress control mode is lower than the second progress adjustment precision in the second progress control mode. On the contrary, if the first minimum progress adjustment unit is smaller than the second minimum progress adjustment unit, it is considered that the first progress adjustment precision in the first progress control mode is higher than the second progress adjustment precision in the second progress control mode.

Alternatively or additionally, in some embodiments, the progress adjustment precision may be measured by an adjustable progress range which refers to a video progress adjustment amount corresponding to a longest available swipe distance of the user's finger, for example, the video progress adjustment amount corresponding to the user's finger swiping from one side of the predetermined region to the other side. In this case, the progress adjustment precision may be measured by the correspondence between the swipe distance of the finger and the video progress adjustment amount.

Specifically, in the first progress control mode, when the user finger swipes by a first distance, the video adjustment amount is a first duration. Correspondingly, for the same video, in the second progress control mode, when the user finger swipes by the same first distance, the video progress adjustment amount is the second duration. In this case, if the first duration is different from the second duration, it is considered that the first progress control mode and the second progress control mode have different progress adjustment precisions. Further, if the first duration is less than the second duration, it is considered that the second progress adjustment precision in the second progress control mode is lower than the first progress adjustment precision in the first progress control mode. On the contrary, if the first duration is greater than the second duration, it is considered that the second progress control mode has the second progress adjustment precision higher than the first progress adjustment precision of the first progress control mode.

For ease of discussion, in the following discussion, the second progress control mode has a second progress adjustment precision which is higher than the first progress adjustment precision. In this case, in an embodiment, a first minimum progress adjustment unit corresponding to a first progress control mode is greater than a second minimum progress adjustment unit corresponding to a second progress control mode. For example, in the first progress control mode, video progress changes discretely at a minute level (or a second level), and in the second progress control mode, video progress changes discretely at a second level (or a millisecond level). Alternatively or additionally, in another embodiment, in the first progress control mode, the first swipe distance corresponds to a first duration, and in the second progress control mode, the same first swipe distance corresponds to a second duration less than the first duration. For example, in the first progress control mode, the finger swipes forward by one centimeter, the playback progress is forward adjusted for one minute, and in the second progress control mode, the finger swipes forward by one centimeter, and the playback progress is forward adjusted for six seconds.

Since a user may adjust the video playback progress more finely in a second progress control mode, the introduction of the second progress control mode in a playback process of a medium/long video will bring a more significant technical effect. In view of this, the terminal device 110 may be configured to support the second progress control mode only when the playback duration of the current video exceeds a predetermined duration.

In some embodiments, a first adjustable progress range in the first progress control mode includes the total duration of the video, and a second adjustable progress range in the second progress control mode is less than the total duration of the video. In this way, a user may adjust the video progress with a finer adjustment granularity.

Specifically, in a traditional video progress adjustment solution, for medium/long videos, a video adjustment progress precision is usually implemented as a minute level. In this case, an amount of adjustment of the video progress may be ten minutes even with a relatively short dragging distance. According to some embodiments of the disclosure, a second adjustable progress range is smaller than the total duration of the video. In this case, a user may achieve a video progress adjustment of seconds level (even more accurate).

In some embodiments, a second adjustable progress range may be a predetermined duration. Specifically, the maximum swipe distance (for example, the total length of a progress bar or the total length of a predetermined region) is set to correspond to the predetermined duration. For example, when the predetermined duration is 1 minute, as the forward swipe distance reaches the maximum swipe distance, the video may be fast forwarded for 1 minute. On the contrary, as the backward swipe distance reaches the maximum swipe distance, the video may rewind by 1 minute. In practice, the progress adjustment amount of the video may be accurately determined according to a real swipe distance of a user.

Alternatively or additionally, in some embodiments, a second adjustable progress range may be a predetermined proportion of a first adjustable progress range. Specifically, the maximum swipe distance (e.g., the total length of a progress bar or the total length of a predetermined region) is set to a predetermined proportion of the total video duration. For example, when the total video duration is sixty minutes and the predetermined proportion is one tenth of the total video duration, as the forward swipe distance reaches the maximum swipe distance, the video maybe fast forwarded for six minutes. On the contrary, as the backward swipe distance reaches the maximum swipe distance, the video may rewind by six minutes. In practice, the progress adjustment amount of the video may be accurately determined according to the real swipe distance of the user.

In some embodiments, in response to detecting a first progress control operation on the video, a first progress control mode of the video is triggered, and the first progress control operation includes: a first swipe gesture operation in a first direction parallel to a progress bar of the video within an association region for the progress bar, a single-click operation within an association region for the progress bar, and the like. In short, the first progress control operation is configured to trigger entering the first progress control mode.

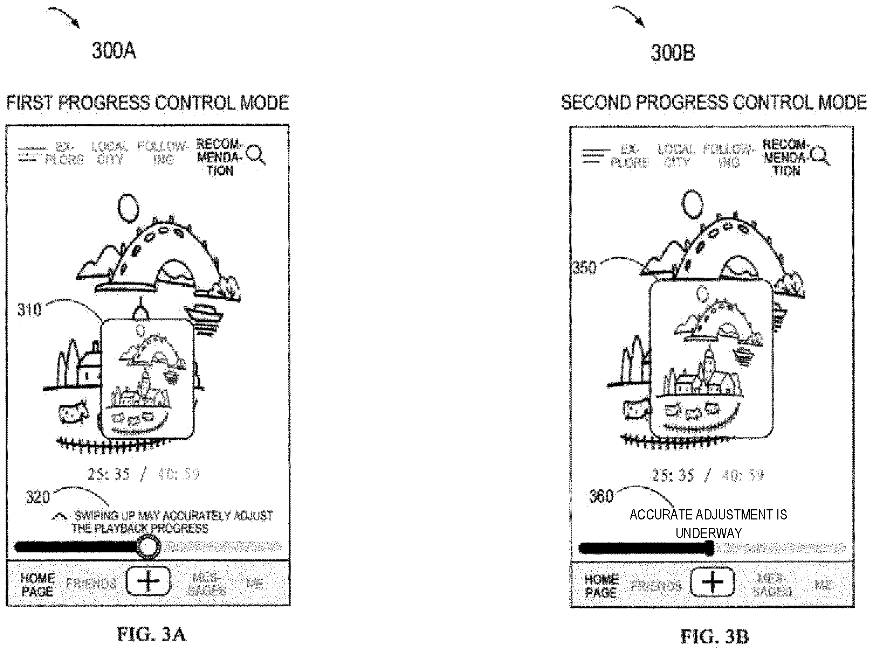

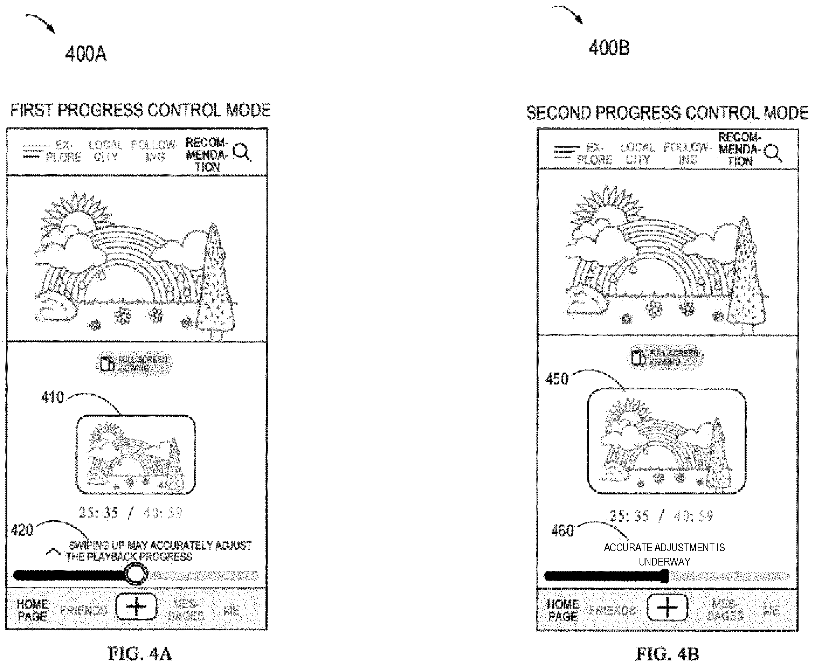

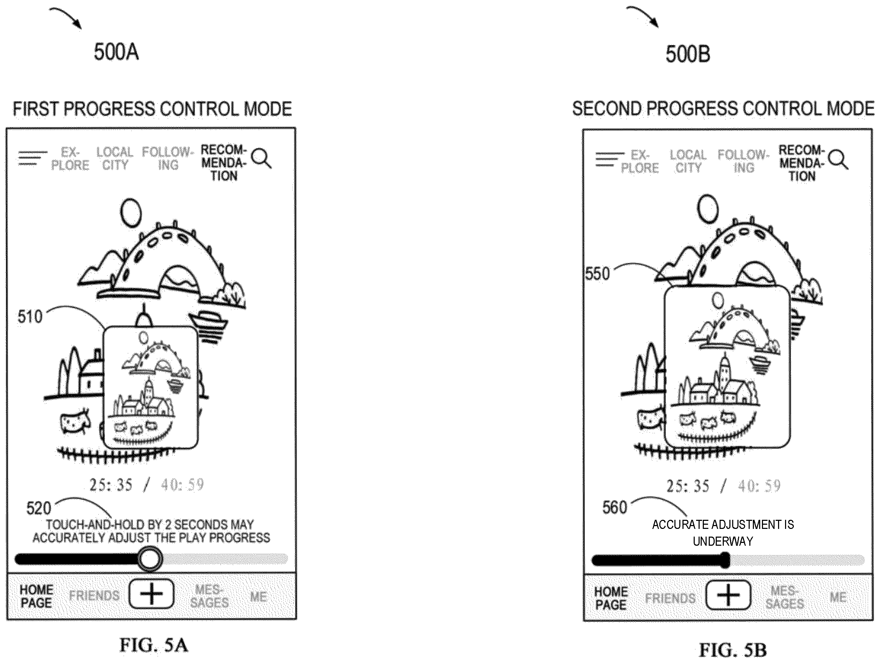

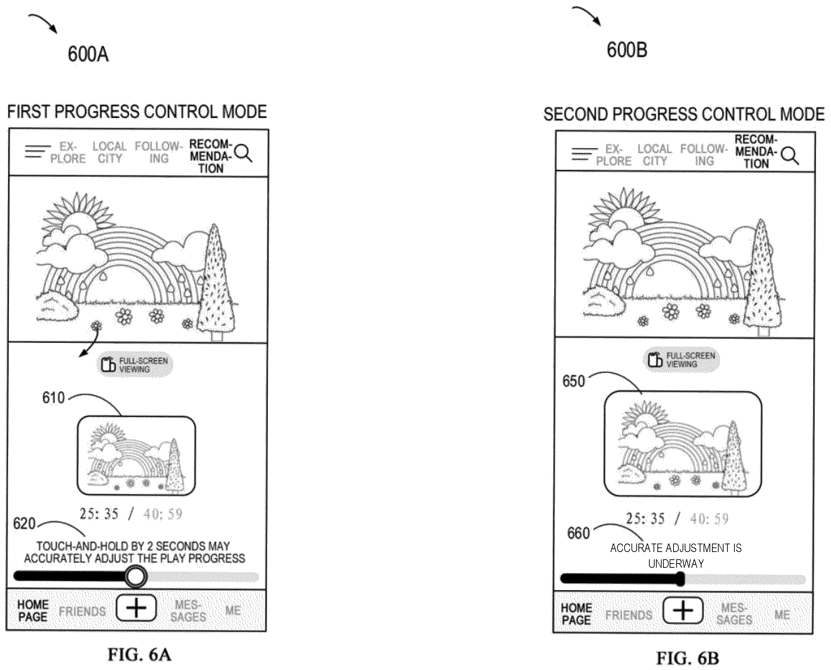

In some embodiments, in response to detecting a second progress control operation on the video, a second progress control mode of the video is triggered. One example of a second progress control operation is a second swipe gesture operation in a second direction perpendicular to a progress bar within the association region, referring to an upward swipe operation in user interfaces 300A and 400A in FIGS. 3A and 4A. Another example of the second progress control operation is a touch-and-hold gesture operation within an association region, referring to a touch-and-hold operation in user interfaces 500A and 600A in FIGS. 5A and 6A.

Compared with other gesture operations, the upward swipe operation and the touch-and-hold operation may be better compatible with the existing video playback operation and better meet the operation habit of a user.

Further, in order to prompt a user on how to trigger a second progress control mode, in some embodiments, in a first progress control mode, the terminal device 110 may present guidance information, where the guidance information indicates a second progress control operation for entering the second progress control mode. In the particular embodiment of FIGS. 3A and 4A, the guidance information 320 and 420 is presented in the user interfaces 300A and 400A, i.e., "^ swiping up may accurately adjust the playback progress". Accordingly, in the particular embodiment of FIGS. 5A and 6A, the guidance information 520 and 620 is presented in the user interfaces 500A and 600A, i.e., "touch-and-hold by 2 seconds may accurately adjust the playback progress".

Additionally, to avoid interference with a user, the number of presentations of the guidance information in FIGS. 3A, 4A, 5A, and 6A may be controlled. In some embodiments, the number of presentations of the guidance information within a predetermined time should not exceed a threshold number. For example, for a predetermined time of twenty-four hours, the guidance information is presented up to three times every twenty-four hours.

According to some embodiments of the disclosure, in order to enable a user to better adjust the video progress to a desired video playback position, after entering a progress control mode, a thumbnail video frame of the video may be presented in the user interface, sometimes referred to as a key frame of the video. Further, as the swipe gesture of a user begins, the terminal device 110 may dynamically present a thumbnail video frame corresponding to the corresponding swipe position.

According to some embodiments of the disclosure, the position of the thumbnail video frame may change according to the type of the currently played video. In FIGS. 3A and 5A, if the currently played video is a portrait video, the thumbnail video frame is presented at a middle position of the user interface. In FIGS. 4A and 6A, the currently played video is a landscape video, and after entering the adjustment mode, the currently played video is moved up to the upper half of the screen, and the thumbnail video frame is presented on the lower half of the user interface. The presentation mode of the thumbnail video frame may achieve an optimal visual presentation effect. It should be understood, however, that in other embodiments, the thumbnail video frame may be presented elsewhere. The disclosure is not limited in this respect.

According to some embodiments of the disclosure, the size of the thumbnail video frame may change with different progress control modes. Specifically, in a first progress control mode, the terminal device 110 presents the thumbnail video frame of the video at a first size, and in a second progress control mode, the terminal device 110 presents the thumbnail video frame of the video at a second size. Further, when a second progress adjustment precision is higher than a first progress adjustment precision, the second size is greater than the first size. Correspondingly, when a second progress adjustment precision is lower than a first progress adjustment precision, the second size is smaller than the first size.

Further, in a first progress control mode, in response to detecting the second progress control operation on the video, the terminal device 110 adjusts the thumbnail video frame from a first size to a second size. In other words, the size change is performed synchronously with the switching of the progress control mode. In this case, the presentation effect of the interface is more consistent with the underlying control logic, thereby effectively improving the user experience.

Alternatively or additionally, the terminal device 110 may further indicate the current progress control mode through a prompt information. In other words, the prompt information may be used to indicate an activation state of a second progress control mode, referring to user interfaces 300B, 400B, 500B, and 600B shown in FIGS. 3B, 4B, 5B, and 6B. Prompt information 360, 460, 560, and 660, i.e., "accurate adjustment is underway", is presented in the user interfaces described above.

See the user interfaces 300A and 300B shown in FIGS. 3A and 3B. In FIGS. 3A and 3B, the played video is a portrait video, and the terminal device 110 switches the user interface from 300A to 300B in response to the swipe up distance reaching a predetermined distance (or the swipe up pixel reaching a predetermined number of pixels). In comparison with the user interface 300A, in the user interface 300B, the guidance information "^ swiping up may accurately adjust the playback progress" is no longer presented. Further, the thumbnail video frame is adjusted from a first size to a second size, and the prompt information "accurate adjustment is underway" is presented..

See user interfaces 400A and 400B shown in FIGS. 4A and 4B. In FIGS. 4A and 4B, the played video is a landscape video, and the terminal device 110 switches the user interface from 400A to 400B in response to the swipe up distance reaching a predetermined distance (or the swipe up pixel reaching a predetermined number of pixels). In comparison with the user interface 400A, in the user interface 400B, the guidance information "^ swiping up may accurately adjust the playback progress" is no longer presented. Further, the thumbnail video frame is adjusted from a first size to a second size, and the prompt information "accurate adjustment is underway" is presented.

See user interfaces 500A and 500B shown in FIGS. 5A and 5B. In FIGS. 5A and 5B, the played video is a portrait video, and the terminal device 110 switches the user interface from 500A to 500B in response to the touch-and-hold duration reaching a predetermined duration. Compared with the user interface 500A, in the user interface 500B, the guide information "touch-and-hold for 2 seconds may accurately adjust the playback progress" is no longer presented. Further, the thumbnail video frame is adjusted from a first size to a second size, and the prompt information "accurate adjustment is underway" is presented..

See user interfaces 600A and 600B shown in FIGS. 6A and 6B. In FIGS. 6A and 6B, the played video is a landscape video, and the terminal device 110 switches the user interface from 600A to 600B in response to the touch-and-hold duration reaching a predetermined duration,. Compared with the user interface 600A, in the user interface 600B, the guide information "touch-and-hold for 2 seconds may accurately adjust the playback progress" is no longer presented. Further, the thumbnail video frame is adjusted from a first size to a second size, and the prompt information "accurate adjustment is underway" is presented..

In some embodiments, in a second progress control mode, the terminal device 110 adjusts, in response to a third swipe gesture operation in a first direction parallel to a progress bar within the association region for the progress bar of the video, the playback progress of the video based on a swipe distance of the third swipe gesture in the first direction and the second progress adjustment precision, where the second progress control operation and the third swipe gesture together constitute a continuous gesture.

As an example implementation, the user triggers to enter the second progress control mode by swiping up to a predetermined distance, and without lifting the finger, the user drags the gesture left and right on the screen to realize the progress adjustment to the video.

As an example implementation, the user drags a progress bar into a (first) progress control mode, and in the first progress control mode, the progress bar is touched-and-held (i.e., the position does not change) for 2 seconds to trigger entering a second progress control mode. Thereafter, the user continues to drag the progress bar to adjust the video progress.

In the foregoing example implementation, the user's finger does not leave the screen all the time, and achieve the switching of the plurality of progress control modes and the accurate adjustment of the video progress only by performing one continuous operation. The above operation is convenient and conforms to the use habit of the user, effectively improving the operation experience of the user.

In some embodiments, in a second progress control mode, the progress bar of the video is configured to continue to indicate the current video playback progress, that is, the progress bar does not have the follow-up effect, and the total length of the progress bar corresponds to the total duration of the video.

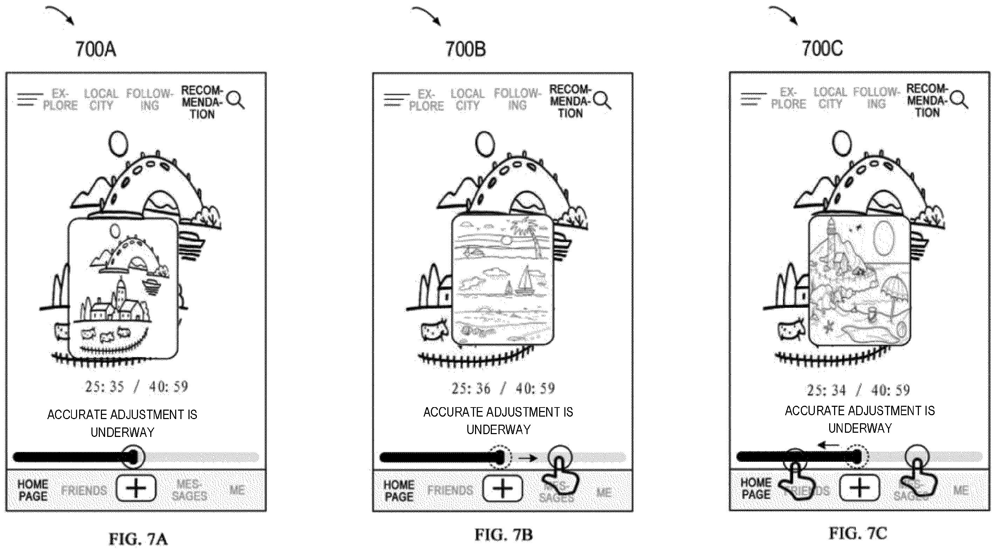

See user interfaces 700A-700C shown in FIGS. 7A-7C. In FIGS. 7A to 7C. the played video is a portrait video. In the user interface 700A, the progress control mode is triggered to enter a second progress control mode, and the trigger time point is 25: 35. Referring to the user interface 700B, when the user swipes forward within the association region for the progress bar, the playback progress is adjusted to 25: 36 based on the swipe distance of the finger and the second progress adjustment precision, and the progress bar still corresponds to the trigger time point 25: 35. Correspondingly, in the user interface 700C, when the user swipes backward within the association region for the progress bar, the playback progress is adjusted to 25: 34 based on the swipe distance of the finger and the second progress adjustment precision, and the progress bar still corresponds to the trigger time point 25: 35.

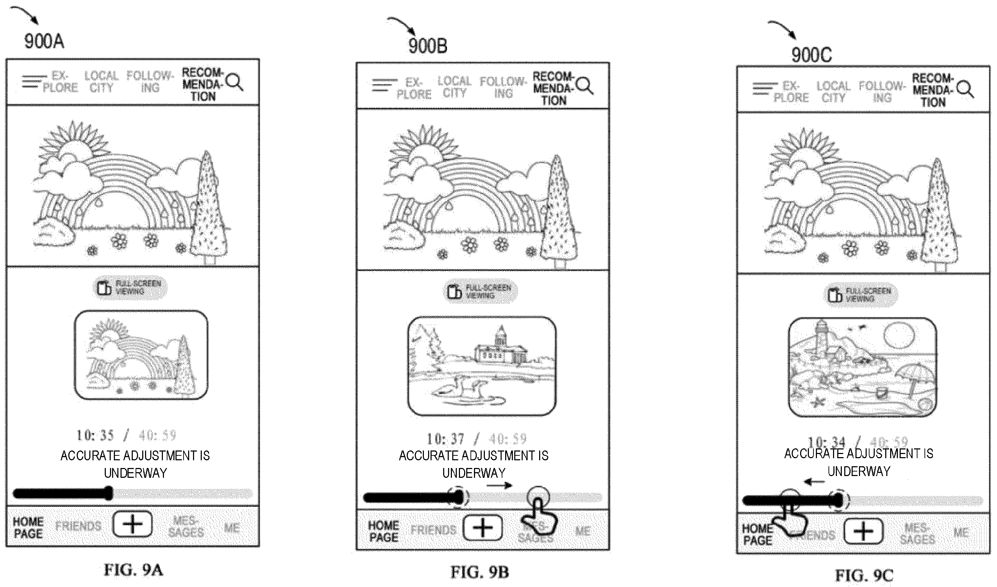

See user interfaces 900A-900C shown in FIGS. 9A-9C. In FIGS. 9A to 9C, the played video is a landscape video. In the user interface 900A, the progress control mode is triggered to enter the second progress control mode, and the trigger time point is 10: 35. Referring to the user interface 900B, when the user swipes forward in the association region for the progress bar, the playback progress is adjusted based on the swipe distance of the finger and the second progress adjustment precision, to 10: 37, and the progress bar still corresponds to the trigger time point 10: 35. Correspondingly, in the user interface 900C, when the user swipes backward in the association region for the progress bar, the playback progress is adjusted based on the swipe distance of the finger and the second progress adjustment precision, and is adjusted to 10: 34, and the progress bar still corresponds to the trigger time point 10: 35.

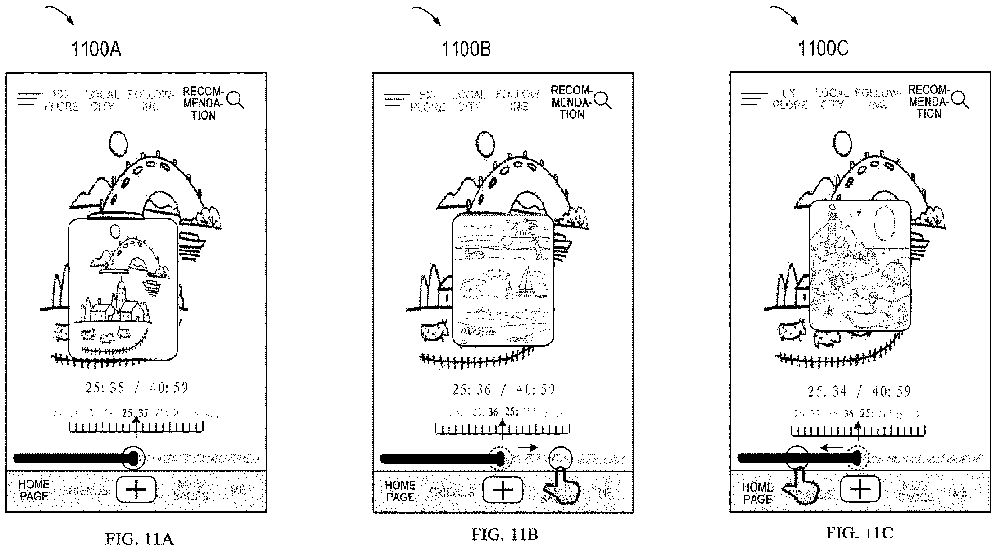

See further user interfaces 1100A-1100C shown in FIGS. 11A-11C. In FIG. 11A to FIG. 11C, the played video is a portrait video. In the user interface 1100A, the progress control mode is triggered to enter a second progress control mode, and the trigger time point is 25: 35. Referring to the user interface 1100B, when the user swipes forward within the association region for the progress bar, the playback progress is adjusted to 25: 36 based on the swipe distance of the finger and the second progress adjustment precision, and the progress bar still corresponds to the trigger time point 25: 35. Correspondingly, in the user interface 1100C, when the user swipes backward within the association region for the progress bar, the playback progress is adjusted to 25: 34, based on the swipe distance of the finger and the second progress adjustment precision, and the progress bar still corresponds to the trigger time point 25: 35.

Alternatively, in some embodiments, in the second progress control mode, the progress bar of the video is set to correspond to the second adjustable progress range and to have a follow-up effect, and the terminal device 110 sets, in response to exiting the second progress control mode, the progress bar of the video to correspond to the first adjustable progress range and to indicate the adjusted playback progress.

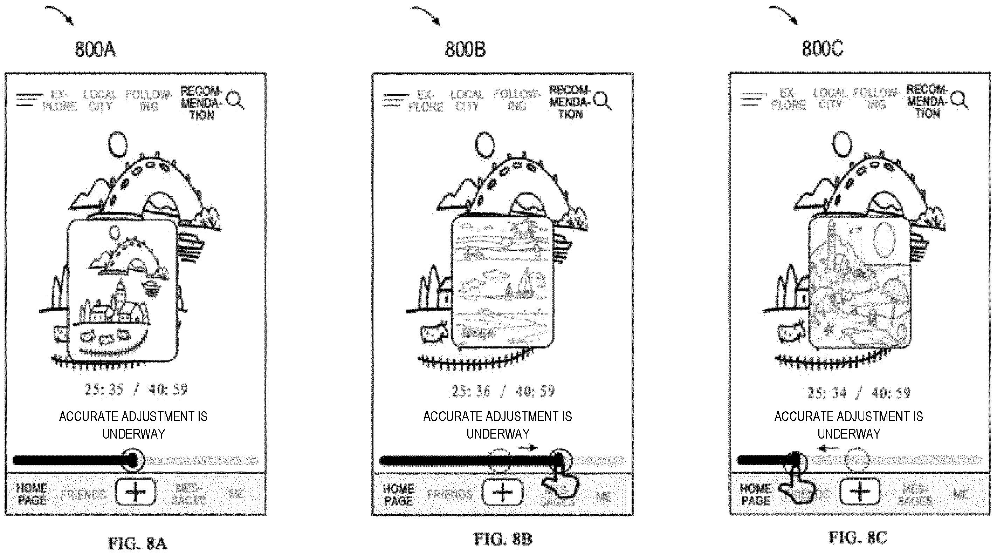

See user interfaces 800A-800C shown in FIGS. 8A-8C. In FIGS. 8A to 8C, the played video is a portrait video. In the user interface 800A, the progress control mode is triggered to enter the second progress control mode, and the trigger time point is 25: 35. Referring to the user interface 800B, when the user swipes forward within the association region for the progress bar, the progress bar changes its position along with the swiping of the finger, and the playback progress is adjusted to 25: 36 based on the swipe distance of the finger and the second progress adjustment precision. Correspondingly, in the user interface 800C, when the user swipes backward within the association region for the progress bar, the progress bar changes its position along with the swiping of the finger, and the playback progress is adjusted to 25: 34 based on the swipe distance of the finger and the second progress adjustment precision.

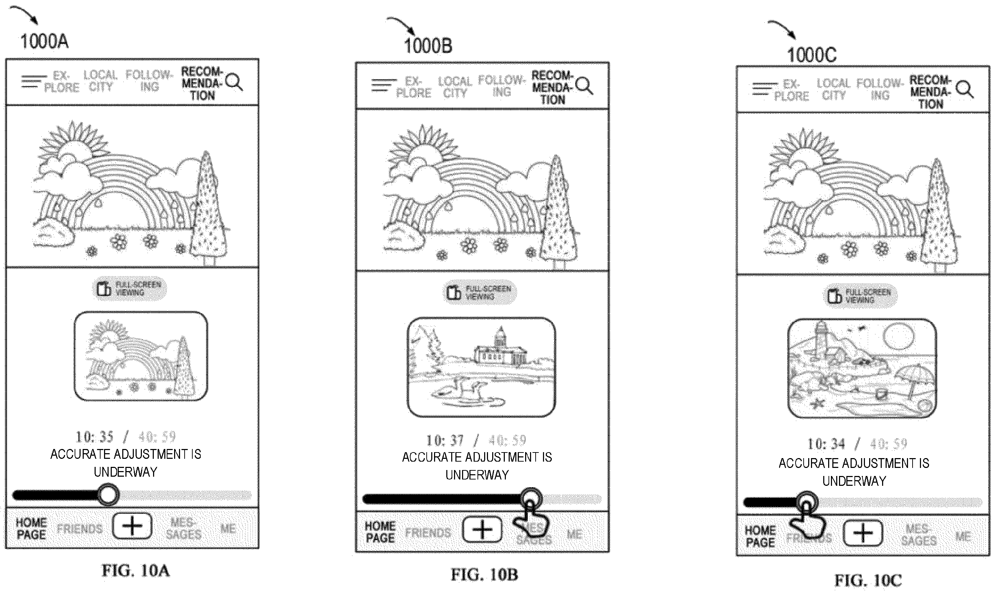

See user interfaces 1000A-1000C shown in FIGS. 10A-10C. In FIGS. 10A to 10C, the played video is a landscape video. In the user interface 1000A, the progress control mode is triggered to enter a second progress control mode, and the trigger time point is 10: 35. Referring to the user interface 1000B, when the user swipes forward within the association region for the progress bar, the progress bar changes its position along with the swiping of the finger, and the playback progress is adjusted to 10: 37 based on the swipe distance of the finger and the second progress adjustment precision. Correspondingly, in the user interface 1000C, when the user swipes backward within the association region for the progress bar, the progress bar changes its position along with the swiping of the finger, and the playback progress is adjusted to 10: 34 based on the swipe distance of the finger and the second progress adjustment precision.

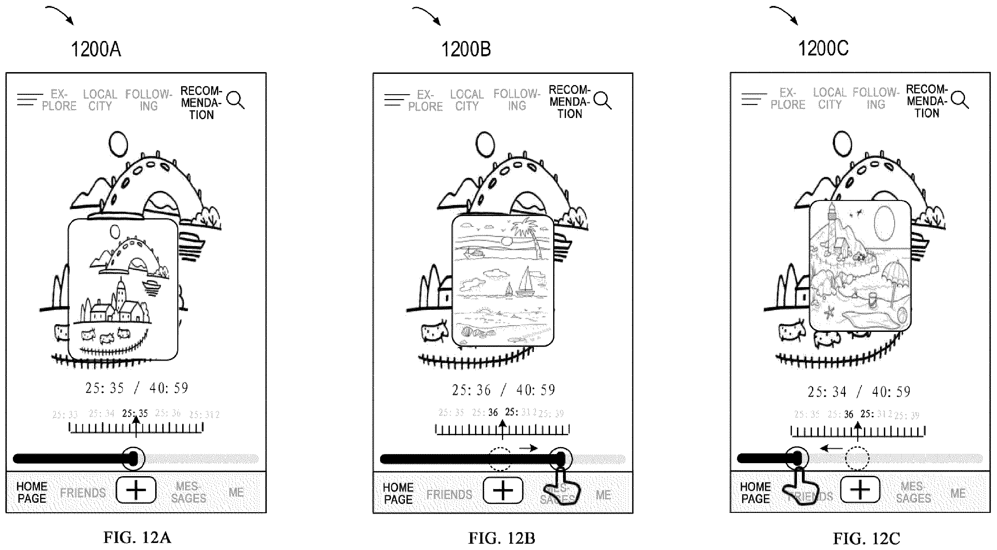

See further user interfaces 1200A-1200C shown in FIGS. 12A-12C. In FIG. 12A to FIG. 12C, the played video is a portrait video. In the user interface 1200A, the progress control mode is triggered to enter a second progress control mode, and the trigger time point is 25: 35. Referring to the user interface 1200B, when the user swipes forward within the association region for the progress bar, the progress bar changes its position along with the swiping of the finger, and the playback progress is adjusted to 25: 36 based on the swipe distance of the finger and the second progress adjustment precision. Correspondingly, in the user interface 1200C, when the user swipes backward within the association region for the progress bar, the progress bar changes its position along with the swiping of the finger, and the playback progress is adjusted to 25: 34 based on the swipe distance of the finger and the second progress adjustment precision.

Further, in order to simultaneously prompt to the user the current playback time instant as well as the adjusted time instant, in some embodiments, in the second progress control mode, the terminal device 110 may present a progress scale indication, where the progress scale indication is associated with the second progress control mode and the scale interval thereof may change according to different second progress adjustment precisions.

Further, in some embodiments, a predetermined scale range is indicated by a plurality of scales, and the scale interval of the plurality of scales is less than one second. In this way, the user may implement a progress adjustment of the second level (or finer level).

Referring to FIG. 11A to FIG. 12C, in the second progress control mode, the terminal device 110 may present a progress scale indication, where the progress scale is used to indicate the playback progress of the video within a predetermined scale range, and the scale range changes as the playback progress of the video is adjusted.

It should be understood that during the video progress adjustment process, the current video may be continuously played or further played at a mute or reduced volume. In this case, if the progress bar does not have a follow-up effect, the progress bar should change dynamically as the video is played. Taking FIGS. 7A to 7C as an example, if FIGS. 7A to 7C respectively correspond to user interfaces at three sequential time points and if the current video is continued to be played during the video progress adjustment process, the video images played in the user interfaces 700A, 700B, and 700B should be different from each other, and the progress bars in the user interfaces 700A, 700B, and 700B will slowly advance forward as per the video playback progress to indicate the current video playback position.

Through the above process, after the user triggers the progress adjustment mode, the accurate adjustment mode may be entered by a guiding of the guidance information. Further, by changing the size of the thumbnail video frame and presenting the prompt information, the user may intuitively perceive the switching of the progress control mode and the current progress control mode. More importantly, the user's finger does not need to be lifted throughout the whole operation. Therefore, the operation process is consistent, improving the operation experience of the user.

The above content focuses on the solution of video progress control of the disclosure from the perspective of interface interaction. In existing solutions, the user's gestures may be monitored by multiple programs/components. For example, gesture detection within a predetermined area may detect a displacement of a finger. For another example, gesture detection on the progress bar may only detect a drag distance and fails to detect an upward swipe/touch-and-hold gesture operation. When the second progress control mode is triggered by a gesture such as a swipe up or a touch-and-hold, the horizontal swipe and the swipe up/touch-and-hold need to be detected at the same time. In view of this, there is a need to provide further improvements, which may reuse an existing gesture detection program to the maximum extent, and may achieve detecting an swipe up/touch-and-hold gesture while detecting a horizontal swipe gesture.

Next, how to further detect the swipe up/touch-and-hold to trigger the second progress control mode on the premise of starting the monitoring horizontal swipe will be discussed further in detail in connection with FIGS. 3A to 12C.

For ease of discussion, in the following embodiments, a touch event is a first progress control mode for triggering a video, and the predetermined progress control mode includes a second progress control mode.

In some embodiments, in response to a touch event for the progress bar of the video, the terminal device 110 monitors a swipe gesture which is for triggering a change in the progress bar of the video. Meanwhile, based on the monitoring of the swipe gesture, the terminal device 110 records a gesture movement distance of the finger of the user along a direction perpendicular to the progress bar when the swipe gesture changes, and determines a trigger of the predetermined progress control operation based on the gesture movement distance. As an example embodiment, if the gesture movement distance exceeds a threshold distance, it is determined that the predetermined progress control operation is triggered.

As an example embodiment, in response to entering the progress control mode, the terminal device 110 invokes a component for detecting a swipe gesture within a predetermined area (such as 220 in FIG. 2A and 260 in FIG. 2B), and the component may return position coordinates of the finger within the predetermined area. Based on the position coordinates, the terminal device 110 may obtain an amount of displacement of the finger in a direction perpendicular to the progress bar, thereby determining whether a swipe up operation occurs.

As another example embodiment, the terminal device 110 invokes a component for detecting a swipe gesture on a progress bar (e.g., 210 in FIG. 2A and 250 in FIG. 2B). The component may record the time instant when the progress bar is touched, and may also provide a callback function, and the callback function may be periodically called to return the position of the finger on the progress bar. However, the component fails to detect the swipe up operation. In this case, there is a need to additionally record the relative position change of the swipe gesture. Specifically, when the component detects that the progress bar is touched, the terminal device 110 records a first position of the finger on the screen, and when the swipe gesture occurs (the callback function is called), the terminal device 110 records a second position of the finger on the screen. By comparing the first position and the second position, the terminal device 110 may obtain an amount of displacement of the finger in a direction perpendicular to the progress bar, thereby determining whether a swipe up operation occurs.

Alternatively, in some embodiments, in response to a touch event for the progress bar of the video, the terminal device 110 monitors a swipe gesture for triggering a change in the progress bar of the video. Meanwhile, based on the monitoring of the swipe gesture, the terminal device 110 records a duration in which the progress bar of the video does not change if the touch of the finger of the user is maintained, and determines a trigger of the predetermined progress control operation based on the gesture movement distance, and the predetermined progress control operation is used to trigger the predetermined progress control mode of the video. As an example embodiment, if the duration exceeds a threshold duration, it is determined that the predetermined progress control operation is triggered.

In some embodiments, a timer for monitoring the display of the progress of the video is started in response to the touch event, and recording the duration in which the progress bar of the video does not change if the touch of the finger of the user is maintained includes: monitoring a callback to the process for updating the progress bar of the video after the timer is started; and updating the duration in which the progress bar of the video does not change based on the callback to the process.

As an example embodiment, the terminal device 110 invokes a component for detecting a swipe gesture on a progress bar (such as 210 in FIG. 2A and 250 in FIG. 2B). As discussed above, the component may record the time instant at which the progress bar is touched, and may also provide a callback function that may be called periodically to return the position of the finger on the progress bar. In operation, when the component detects that the progress bar is touched, a timer is started at the same time which calls the callback function at a predetermined period (e.g., 1/60 seconds). If the callback function indicates that the position of the user on the progress bar is the same as the previous time, the timer starts timing/continues timing, and if the callback function indicates that the position of the user on the progress bar changes, the timer is reset. In this case, if timing of the timer reaches the threshold duration, the second progress control mode is triggered.

As still another example embodiment, the terminal device 110 also invokes a component for detecting a swipe gesture on the progress bar. In this embodiment, during the progress bar dragging process, the terminal device 110 maintains a local counter. In operation, when the component detects that the progress bar is touched, the counter is turned on at the same time which invokes the callback function at a predetermined period (e.g., 1/60 seconds). If the callback function indicates that the position of the user on the progress bar is the same as the previous time, the timer value is incremented by 1, and if the callback function indicates that the position of the user on the progress bar changes, the counter is reset. In this case, if the value of the counter reaches the threshold number, the second progress control mode is triggered.

In some embodiments, the timer/clock is turned on in response to detecting that the progress bar is touched, and is ended in response to the finger being lifted. In this way, in the process of swiping the progress bar at a time, the operation of "turning on/off" the clock/counter needs to be performed only once, thereby achieving the operation of simultaneously detecting the swipe gesture and the touch-and-hold gesture in the case of less time consumed by the system.

In practice, the swipe up operation/touch-and-hold operation is likely to be assigned with other physical meaning. In this case, it is particularly important to distinguish whether the swipe up operation/touch-and-hold operation is used to trigger the second progress control mode or to trigger other functions. According to some embodiments of the disclosure, at least one of the threshold distance, the threshold duration, or the threshold number is determined based at least on a predetermined progress control mode.

For example, the triggering of the second progress control mode corresponds to a first threshold distance/first threshold duration, and the triggering of another function corresponds to a second threshold distance/second threshold duration, where the first threshold distance/first threshold duration is greater than the second threshold distance/second threshold duration. In this case, another function is activated when the user swipe up distance is greater than the second threshold distance and less than the first threshold distance, and the second progress control mode is triggered when the user swipe up distance is greater than the first threshold distance. Correspondingly, when the touch-and-hold duration of the user is greater than the second threshold duration and less than the first threshold duration, another function is activated, and the second progress control mode is triggered when the touch-and-hold duration of the user is greater than the first threshold duration. In this way, the conflict between the newly introduced swipe up trigger second progress control mode and the existing swipe up gesture operation is avoided to a maximum extent.

As discussed above, in a conventional solution, it is impossible to detect the touch-and-hold operation while detecting the horizontal swipe of the detection progress bar. According to some embodiments of the disclosure, by introducing a timer, the touch-and-hold operation may be detected while the horizontal swipe of the detection progress bar is detected.

After the accurate adjustment is finished (for example, in the second progress control mode, the user lifts the finger), the terminal device 110 needs to adjust the progress bar to the accurate adjusted position, and continues to play the accurately adjusted video. Next, how to determine the accurate adjusted video playback position will be discussed in conjunction with the example embodiments.

In some embodiments, after the predetermined progress control mode is triggered, the terminal device 110 detects an adjustment operation for the progress bar in the predetermined progress control mode.

In response to detecting the adjustment operation, the terminal device 110 determines a progress bar mapping value in the predetermined progress control mode based on the following information: a first progress bar value when the predetermined progress control mode is triggered, a second progress bar value adjusted in the predetermined progress control mode, and a mapping proportion corresponding to the predetermined progress control mode.

Next, the terminal device 110 determines the adjusted playback progress of the video based at least on the progress bar mapping value and the total progress bar value

In some embodiments, the determining, by the terminal device 110, a progress bar mapping value includes: determining a progress bar difference between a first progress bar value and a second progress bar value; determining a progress bar mapping difference based on the progress bar difference and a mapping proportion; and determining a progress bar mapping value based on the progress bar mapping difference and the first progress bar value.

In some embodiments, determining the adjusted progress of the video includes: determining a ratio between a progress bar mapping value and the total progress bar value; and determining the adjusted playback progress of the video based on the ratio and the total duration of the video.

As an example embodiment, the terminal device 110 invokes a component for detecting a swipe gesture on a progress bar (such as 210 in FIG. 2A and 250 in FIG. 2B). As discussed above, the component may provide a callback function that may be periodically invoked to return the position of the finger on the progress bar. In operation, if it is determined that the second progress control mode has not been triggered, the value of the progress bar obtained when the callback function is called most recently is recorded by using a first parameter, and in the user dragging process, the value of the first parameter is continuously updated dynamically by periodically calling the callback function. If it is detected that the second progress control mode is triggered (i.e., enters the accurate adjustment mode), the value of the current first parameter (i.e., the first progress bar value) is recorded. In the second progress control mode, the callback function is invoked to obtain the position of the finger on the progress bar. Like the operation in the first progress control mode, the callback function is still called periodically in the first progress control mode. When the user's finger is lifted, the position on the progress bar returned by the callback function most recently is recorded as the second progress bar value.

It may be understood that a difference between the second progress bar value and the first progress bar value is a drag distance of the user on the progress bar in the second progress control mode. According to some embodiments of the disclosure, when calculating the adjustment amount of the video progress, the drag distance is scaled according to the mapping proportion. In this case, the adjusted position of the progress bar is the sum of the first progress bar value and the quotient of the drag distance and the mapping proportion. In a particular embodiment, the mapping proportion may be set to a fixed value, e.g., 10. In another specific embodiment, if the first progress adjustment control mode corresponds to the first adjustable progress range and the second progress adjustment control mode corresponds to the second adjustable progress range having the predetermined duration, the mapping proportion is a quotient between the total video duration and the predetermined duration.

After the user lifts the finger, the terminal device 110 adjusts the progress bar to the adjusted position. Correspondingly, the adjusted video playback progress is set to a product of the total video duration and the quotient between the adjusted value of the progress bar and the total length of the progress bar.

In this way, the swipe up/touch-and-hold gesture operation may be detected while the horizontal swipe gesture operation is detected. The user may enter the accurate video adjustment mode through the swipe up/touch-and-hold gesture.

### Example Methods

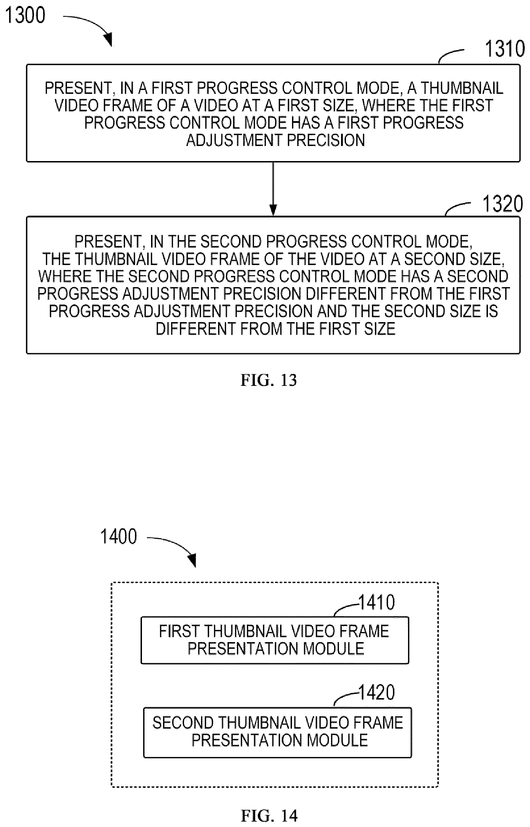

FIG. 13 shows a flowchart of a process 1300 for information processing according to some embodiments of the disclosure. The process 1300 may be implemented at the terminal device 110. The process 1300 is described below with reference to FIG. 1.

In block 1310, the terminal device 110 may present, in a first progress control mode, a thumbnail video frame of a video at a first size, where the first progress control mode has a first progress adjustment precision.

In block 1320, the terminal device 110 may present, in a second progress control mode, the thumbnail video frame of the video at a second size, where the second progress control mode has a second progress adjustment precision different from the first progress adjustment precision and the second size is different from the first size.

In some embodiments, the second progress adjustment precision is higher than the first progress adjustment precision and the second size is greater than the first size.

In some embodiments, the terminal device 110 may trigger, in response to detecting a first progress control operation on the video, the first progress control mode of the video, where the first progress control operation includes: a first swipe gesture operation in a first direction parallel to a progress bar of the video within an association region for the progress bar.

In some embodiments, the terminal device 110 may trigger, in response to detecting a second progress control operation on the video, the second progress control mode of the video, where the second progress control operation includes: a touch-and-hold gesture operation within the association region, or a second swipe gesture operation in a second direction perpendicular to the progress bar within the association region.

In some embodiments, the terminal device 110 may adjust, in the first progress control mode, the thumbnail video frame from the first size to the second size in response to detecting the second progress control operation on the video.

In some embodiments, the terminal device 110 may adjust in the second progress control mode, in response to a third swipe gesture operation in the first direction within the association region for the progress bar of the video, a playback progress of the video based on a swipe distance of the third swipe gesture in the first direction and the second progress adjustment precision, where the second progress control operation and the third swipe gesture together constitute a continuous gesture.

In some embodiments, a first adjustable progress range in the first progress control mode may include a total duration of the video, and/or a second adjustable progress range in the second progress control mode may be less than the total duration of the video.

In some embodiments, the second adjustable progress range may be a predetermined duration, or a predetermined proportion of the first adjustable progress range.

In some embodiments, the terminal device 110 may set, in the second progress control mode, a progress bar of the video to correspond to the second adjustable progress range and to have a follow-up effect. Further, the terminal device 110 may set, in response to exiting the second progress control mode, the progress bar of the video to correspond to the first adjustable progress range and to indicate an adjusted playback progress.

In some embodiments, the terminal device 110 may present a progress scale indication in the second progress control mode, where the progress scale is configured to indicate a playback progress of the video within a predetermined scale range, and the scale range change as the playback progress of the video is adjusted.

In some embodiments, the predetermined scale range is indicated by a plurality of scales, and the scale interval of the plurality of scales is less than one second.

In some embodiments, the progress scale indication is presented in association with the progress bar of the video.

In some embodiments, the terminal device 110 may present, in the first progress control mode, guidance information indicating a second progress control operation for entering the second progress control mode.

In some embodiments, the terminal device 110 may present, in the second progress control mode, prompt information indicating an activation state of the second progress control mode.

### Example Apparatus and Devices

FIG. 14 is a schematic structural block diagram of an information processing apparatus 1400 according to some embodiments of the disclosure. The apparatus 1400 may be implemented or included in the terminal device 110. The various modules/components in the apparatus 1400 may be implemented by hardware, software, firmware, or any combination thereof.

As shown, the apparatus 1400 includes a first thumbnail video frame presentation module 1410, configured to: present, in a first progress control mode, a thumbnail video frame of a video at a first size, the first progress control mode having a first progress adjustment precision; and a second thumbnail video frame presentation module 1420, configured to: present, in a second progress control mode, the thumbnail video frame of the video at a second size, the second progress control mode having a second progress adjustment precision different from the first progress adjustment precision, and the second size is greater than the first size.

In some embodiments, the second progress adjustment precision is higher than the first progress adjustment precision and the second size is greater than the first size.

In some embodiments, the apparatus 1400 further includes a first triggering module (not shown) configured to trigger, in response to detecting a first progress control operation on the video, the first progress control mode of the video, the first progress control operation including: a first swipe gesture operation in a first direction parallel to the progress bar of the video within an association region of the progress bar.

In some embodiments, the apparatus 1400 further includes a second triggering module (not shown) configured to trigger, in response to detecting a second progress control operation on the video, the second progress control mode of the video, the second progress control operation comprising: a touch-and-hold gesture operation within the association region, or a second swipe gesture operation in a second direction perpendicular to the progress bar within the association region.

In some embodiments, the apparatus 1400 further includes a thumbnail video frame adjustment module (not shown) configured to adjust, in the first progress control mode, the thumbnail video frame from the first size to the second size in response to detecting the second progress control operation on the video.

In some embodiments, the apparatus 1400 further includes an accurate progress adjustment module (not shown) configured to: adjust, in the second progress control mode, in response to a third swipe gesture operation in the first direction within the association region for the progress bar of the video, a playback progress of the video based on a swipe distance of the third swipe gesture in the first direction and the second progress adjustment precision, wherein the second progress control operation and the third swipe gesture together constitute a continuous gesture.

In some embodiments, the first adjustable progress range in the first progress control mode includes a total duration of the video, and/or a second adjustable progress range in the second progress control mode is less than the total duration of the video.

In some embodiments, the second adjustable progress range is a predetermined duration, or a predetermined proportion of the first adjustable progress range.

In some embodiments, the apparatus 1400 further includes a progress bar adjustment module (not shown) configured to: set, in the second progress control mode, a progress bar of the video to correspond to the second adjustable progress range and to have a follow-up effect; and set, in response to exiting the second progress control mode, the progress bar of the video to correspond to the first adjustable progress range and to indicate an adjusted playback progress.

In some embodiments, the apparatus 1400 further includes a progress scale presentation module (not shown) configured to: present a progress scale indication in the second progress control mode, the progress scale being configured to indicate a playback progress of the video within a predetermined scale range, and the scale range changing as the playback progress of the video is adjusted.

In some embodiments, the predetermined scale range is indicated by a plurality of scales, and the scale interval of the plurality of scales is less than one second.

In some embodiments, the apparatus 1400 further includes a guidance information presentation module (not shown) configured to present, in the first progress control mode, guidance information indicating a second progress control operation for entering the second progress control mode.

In some embodiments, the apparatus 1400 further includes a prompt information presentation module (not shown) configured to present, in the second progress control mode, prompt information indicating an activation state of the second progress control mode.

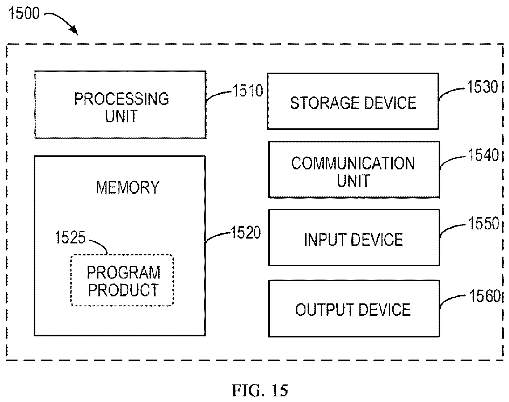

FIG. 15 illustrates a block diagram of an electronic device 1500 in which one or more embodiments of the disclosure may be implemented. It should be understood that the electronic device 1500 illustrated in FIG. 15 is merely illustrative and should not constitute any limitation on the functionality and scope of the embodiments described herein. The electronic device 1500 shown in FIG. 15 may be configured to implement the electronic device 110 in FIG. 1 or the apparatus 1400 of FIG. 14.

As shown in FIG. 15, the electronic device 1500 is in the form of a general-purpose electronic device. Components of the electronic device 1500 may include, but are not limited to, one or more processors 1510 or processing units, a memory 1520, a storage device 1530, one or more communication units 1540, one or more input devices 1550, and one or more output devices 1560. The processing unit 1510 may be an actual or virtual processor and capable of performing various processes according to programs stored in the memory 1520. In a multiprocessor system, a plurality of processors execute computer-executable instructions in parallel to improve the parallel processing capability of the electronic device 1500.

The electronic device 1500 generally includes a plurality of computer storage media. Such media may be any available media accessible to the electronic device 1500, including, but not limited to, volatile and non-volatile media, removable and non-removable media. The memory 1520 may be a volatile memory (e.g., a register, a cache, a random access memory (RAM)), a non-volatile memory (e.g., a read-only memory (ROM), electrically erasable programmable read-only memory (EEPROM), a flash memory), or some combination thereof. The storage device 1530 may be a removable or non-removable medium and may include a machine-readable medium, such as a flash drive, magnetic disk, or any other medium, which may be capable of storing information and/or data (e.g., training data for training) and may be accessed within the electronic device 1500.

The electronic device 1500 may further include additional removable/non-removable, volatile/non-volatile storage media/medium. Although not shown in FIG. 15, a disk drive for reading from or writing into a removable, nonvolatile magnetic disk (e.g., a "floppy disk") and an optical disk drive for reading from or writing into a removable, nonvolatile optical disk may be provided. In these cases, each drive may be connected to a bus (not shown) by one or more data media interfaces. The memory 1520 may include a computer program product 1525 having one or more program modules configured to perform various methods or actions of various embodiments of the disclosure.

The communication unit 1540 implements communication with other electronic device through a communication medium. Additionally, the functionality of components of the electronic device 1500 may be implemented in a single computing cluster or multiple computing machines capable of communicating over a communication connection. Thus, the electronic device 1500 may operate in a networked environment using logical connections with one or more other servers, network personal computers (PCs), or another network node.

The input device 1550 may be one or more input devices, such as a mouse, a keyboard, a trackball, or the like. The output device 1560 may be one or more output devices, such as a display, a speaker, a printer, or the like. The electronic device 1500 may also communicate with one or more external devices (not shown) through the communication unit 1540 as needed, the external device such as a storage device, a display device, etc., communicates with one or more devices that enable a user to interact with the electronic device 1500, or communicates with any device (e.g., a network card, a modem, etc.) that enables the electronic device 1500 to communicate with one or more other electronic devices. Such communication may be performed via an input/output (I/O) interface (not shown).

According to example embodiments of the disclosure, there is provided a computer-readable storage medium having computer-executable instructions stored thereon, and the computer-executable instructions are executed by a processor to implement the method described above. According to example embodiments of the disclosure, a computer program product is further provided, the computer program product being tangibly stored on a non-transitory computer-readable medium and including computer-executable instructions, the computer-executable instructions being executed by a processor to implement the method described above.

Aspects of the disclosure are described herein with reference to flowcharts and/or block diagrams of a method, an apparatus, a device, and a computer program product implemented in accordance with the disclosure. It should be understood that each block of the flowchart and/or block diagram, and combination(s) of blocks in the flowchart(s) and/or block diagram(s), may be implemented by computer readable program instructions.

These computer-readable program instructions may be provided to a processing unit of a general purpose computer, special purpose computer, or other programmable data processing apparatus to produce a machine, such that the instructions, when executed by a processing unit of the computer or other programmable data processing apparatus, produce means to implement the functions/acts specified in one or more blocks in the flowchart(s) and/or block diagram(s). These computer-readable program instructions may also be stored in a computer-readable storage medium, and cause the computer, programmable data processing apparatus, and/or other devices to work in a particular manner, such that the computer-readable medium storing instructions includes an article of manufacture including instructions to implement aspects of the functions/acts specified in one or more blocks in the flowchart(s) and/or block diagram(s).

The computer-readable program instructions may be loaded onto the computer, other programmable data processing apparatus, or other apparatus, such that a series of operational steps are performed on the computer, other programmable data processing apparatus, or other apparatus to produce a computer-implemented process, such that the instructions executed on the computer, other programmable data processing apparatus, or other apparatus implement the functions/acts specified in one or more blocks in the flowchart(s) and/or block diagram(s).

The flowchart and block diagrams in the figures show architecture, functionality, and operation that may be possibly implemented by system(s), method(s), and computer program product(s) according to various implementations of the disclosure. In this regard, each block in the flowchart or block diagram may represent a module, program segment, or part of an instruction that includes one or more executable instructions for implementing the specified logical function. In some alternative implementations, the functions noted in the block(s) may also occur in a different order than noted in the figures. For example, two consecutive blocks may actually be performed substantially in parallel, which may sometimes be performed in the reverse order, depending on the functionality involved. It is also noted that each block in the block diagram and/or flowchart, as well as combination(s) of blocks in the block diagram(s) and/or flowchart(s), may be implemented with a dedicated hardware-based system that performs the specified functions or actions, or may be implemented in a combination of dedicated hardware and computer instructions.

Various implementations of the disclosure have been described above, which are illustrative, not exhaustive, and are not limited to the implementations disclosed. Many modifications and variations will be apparent to those of ordinary skill in the art without departing from the scope of the various implementations illustrated. The selection of the terms used herein is intended to best explain the principles of the implementations, practical applications, or improvements to techniques in the marketplace, or to enable others of ordinary skill in the art to understand the various embodiments disclosed herein.

## Claims

1. A method for controlling video progress, comprising:
presenting, in a first progress control mode, a thumbnail video frame of a video at a first size, the first progress control mode having a first progress adjustment precision; and
presenting, in a second progress control mode, the thumbnail video frame of the video at a second size, the second progress control mode having a second progress adjustment precision different from the first progress adjustment precision, and the second size being different from the first size.

2. The method of claim 1, further comprising:
triggering, in response to detecting a first progress control operation on the video, the first progress control mode of the video, the first progress control operation comprising: a first swipe gesture operation in a first direction parallel to a progress bar of the video within an association region for the progress bar; and/or
triggering, in response to detecting a second progress control operation on the video, the second progress control mode of the video, the second progress control operation comprising: a touch-and-hold gesture operation within the association region, or a second swipe gesture operation in a second direction perpendicular to the progress bar within the association region.

3. The method of claim 2, further comprising:
adjusting, in the first progress control mode, the thumbnail video frame from the first size to the second size in response to detecting the second progress control operation on the video.

4. The method of claim 2, further comprising:
adjusting, in the second progress control mode, in response to a third swipe gesture operation in the first direction within the association region for the progress bar of the video, a playback progress of the video based on a swipe distance of the third swipe gesture in the first direction and the second progress adjustment precision, wherein the second progress control operation and the third swipe gesture together constitute a continuous gesture.

5. The method of claim 1, wherein a first adjustable progress range in the first progress control mode comprises a total duration of the video, and/or
a second adjustable progress range in the second progress control mode is less than the total duration of the video.

6. The method of claim 5, wherein the second adjustable progress range is a predetermined duration, or the second adjustable progress range is a predetermined proportion of the first adjustable progress range.

7. The method of claim 5, further comprising:
setting, in the second progress control mode, a progress bar of the video to correspond to the second adjustable progress range and to have a follow-up effect; and
setting, in response to exiting the second progress control mode, the progress bar of the video to correspond to the first adjustable progress range and to indicate an adjusted playback progress.

8. The method of claim 1, further comprising:
presenting a progress scale indication in the second progress control mode, the progress scale being configured to indicate a playback progress of the video within a predetermined scale range, and the scale range changing as the playback progress of the video is adjusted.

9. The method of claim 8, wherein the predetermined scale range is indicated by a plurality of scales, and a scale interval of the plurality of scales is less than one second.

10. The method of claim 1, further comprising at least one of the following:
presenting, in the first progress control mode, guidance information indicating a second progress control operation for entering the second progress control mode; or
presenting, in the second progress control mode, prompt information indicating an activation state of the second progress control mode.

11. An apparatus for controlling video progress, comprising:
a first thumbnail video frame presentation module configured to present, in a first progress control mode, a thumbnail video frame of a video at a first size, the first progress control mode having a first progress adjustment precision; and
a second thumbnail video frame presentation module configured to present, in a second progress control mode, the thumbnail video frame of the video at a second size, the second progress control mode having a second progress adjustment precision different from the first progress adjustment precision, and the second size being different from the first size.

12. An electronic device, comprising:
at least one processing unit; and
at least one memory coupled to the at least one processing unit and storing instructions for execution by the at least one processing unit, wherein the instructions, when executed by the at least one processing unit, cause the device to perform the method according to any of claims 1-10.

13. A computer-readable storage medium having a computer program stored thereon, wherein the computer program, when executed by a processor, implements the method according to any of claims 1-10.
